# EUROPEAN PATENT APPLICATION

(11) **EP 4 131 090 A1**
(43) Date of publication of application: **08.02.2023**
(21) Application number: 21775782.2
(22) Date of filing: 26.03.2021
(51) Int. Cl.: G06N 20/00

(54) **MACHINE LEARNING DEVICE, LEARNING MODEL GENERATION METHOD, AND PROGRAM**

(30) Priority: 27.03.2020 JP 2020059007
(71) Applicant: KYB Corporation, Tokyo 105-6111 (JP)
(72) Inventor: KIKUCHI, Takayoshi, Tokyo 105-6111 (JP); OHUCHIDA, Shun, Tokyo 105-6111 (JP)
(74) Representative: Rösler Rasch van der Heide & Partner
(86) International application number: PCT/JP2021/012928
(87) International publication number: WO 2021/193931

(57) **Abstract**

The present invention improves accuracy in machine learning and reduce running costs by updating to a new learning model generated by selecting data, etc.

The data collector collects data to perform machine learning. The data storage stores the collected data. The data selector selects data for updating existing learning models used for machine learning from the data stored in the data storage. The learning model generator generates a new learning model by machine learning based on the selected data, and the updater updates at least the existing learning model to the new learning model generated in the learning model generator.

## Description

### Technical Field

This invention relates to a machine learning device, a method for generating a learning model, and a program.

### Background Art

In recent years, there has been rapid progress in the speed of CPUs (Central Processing Units) and GPUs (Graphics Processing Units), the increase in memory capacity, and machine learning technology. This has enabled machine learning using learning data on the order of hundreds of thousands to millions of data, and highly accurate identification and classification techniques are being established (see Non-Patent Document 1).

### Citation List

### Non-Patent Document

[Non-Patent Document 1]
Yangqing Jia, Evan Shelhamer, Jeff Donahue, Sergey Karayev, Jonathan Long, Ross Girshick, Sergio Guadarrama, and Trevor Darrell. Caffe: Convolutional architecture for fast feature embedding. In Proceedings of the 22nd ACM international conference on Multimedia (pp. 675-678). ACM.

### Summary of Invention

### Technical Problem

In machine learning, in order to detect or recognize a wide range of objects or states of objects in a generalized manner, the same network is used to recognize various objects or states of objects by changing or adding learning models according to the objects or states of objects.

Here, it is generally desirable for the learning model to be generated from a large amount of unbiased data, and when new data is collected during the operational process, the learning model is updated using said data.

However, the use of biased data for updating the learning model leads to a deterioration of accuracy in machine learning.

There was also the problem of considerable running costs if the newly collected data were huge.

Therefore, the present invention aims to solve the above-mentioned problems, and its object is to provide a machine learning device, a method for generating a learning model, and a program for improving accuracy in machine learning and reducing running costs by updating to a new learning model generated by selecting data etc.

### Solution of Problem

First Aspect: At least one embodiment of the present invention proposes a machine learning device comprising: a data collector to collect data to perform machine learning; a data storage to store the collected data; a data selector for selecting data for updating the existing learning model used for machine learning from the data stored in the data storage; a learning model generator that generates a new learning model by the machine learning based on the selected data; an updater that updates the existing learning model with the new learning model generated in the learning model generator.
Second Aspect: At least one embodiment of the present invention proposes a generation method for learning model comprising the steps of: a first step of collecting data to perform machine learning; a second step of selecting data to update an existing learning model used for machine learning from among the collected data; and a third step of generating a new learning model by the machine learning based on the selected data.
Third Aspect: At least one embodiment of the present invention proposes a program to cause a computer to perform the steps of: a first step of collecting data to perform machine learning; a second step of selecting data to update an existing learning model used for machine learning from among the collected data; a third step of generating a new learning model by the machine learning based on the selected data; and a fourth step of updating the existing learning model to the new learning model.

### Brief Description of Drawings

Fig. 1 shows the configuration of the failure prediction detection system in which the machine learning device according to the first embodiment is used.
Fig. 2 shows the configuration of the failure prediction determiner according to the first embodiment.
Fig. 3 shows the configuration of the machine learning device according to the first embodiment.
Fig. 4 is a flowchart showing the processing of the machine learning device according to the first embodiment.
Fig. 5 shows the distribution in the first embodiment.
Fig. 6 shows the configuration of the machine learning device according to the second embodiment.
Fig. 7 shows the configuration of the outlier detector in the machine learning device according to the second embodiment.
Fig. 8 is a flowchart showing the processing of the machine learning device according to the second embodiment.
Fig. 9 shows the outliers in the second embodiment.
Fig. 10 shows the configuration of the machine learning system according to the third embodiment.
Fig. 11 is a flowchart showing the processing of the machine learning device according to the third embodiment

### Description of Embodiments

### <First embodiments

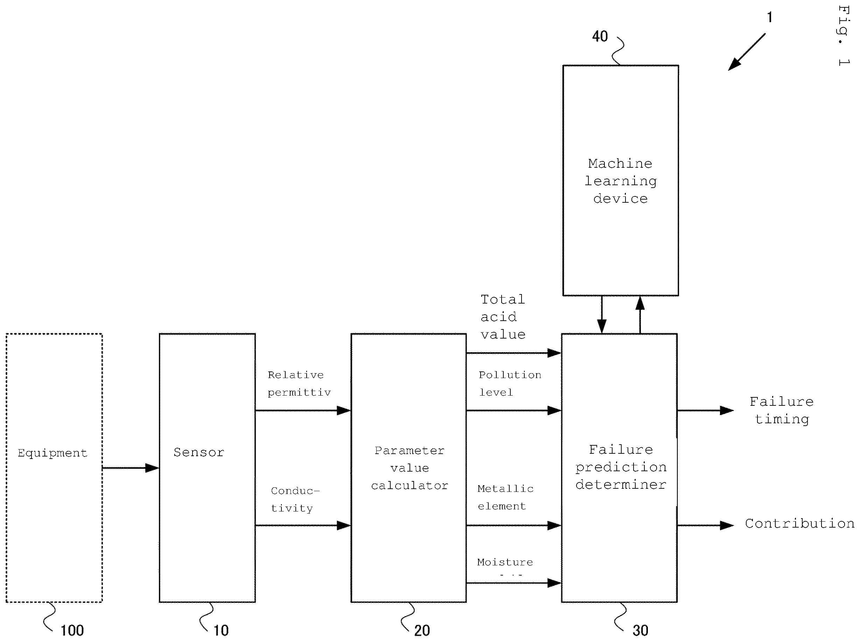

Hereinafter, the machine learning device 40 according to the present embodiment will be described with reference to Figs. 1 to 5.

In the following, the failure prediction detection system 1 will be described as an example of a system in which the machine learning device 40 is used.

### (Configuration of a failure prediction detection system)

Fig. 1 is used to describe the configuration of the failure prediction detection system 1 in which the machine learning device 40 is used. The failure prediction detection system 1 in which the machine learning device 40 is used is a system that detects failure prediction information of equipment based on the oil condition of the hydraulic fluid in the equipment.

As shown in Fig. 1, the failure prediction detection system 1 comprises an oil condition sensor 10, a parameter calculator 20, a failure prediction determiner 30, and a machine learning device 40.

The oil condition sensor 10 is an oil condition sensor that detects the oil condition of the hydraulic oil, is mounted so that the sensing member is immersed in the hydraulic oil of the equipment 100 to be sensed, and acquires information including, for example, the relative permittivity and conductivity of the hydraulic oil.

The parameter calculator 20 obtains values of parameters indicating the state of the hydraulic fluid based on the sensor output of the oil condition sensor 10 and the correlation information.

The failure prediction determiner 30 outputs failure prediction information of equipment 100 in real time from the values of correlated parameters.

Here, the failure prediction determiner 30 inputs the values of correlated parameters, performs machine learning, and outputs failure prediction information for the equipment 100.

The machine learning device 40 updates the learning model used for machine learning in the failure prediction determiner 30. Specifically, the data for updating the learning model used for machine learning is selected from the values of the parameters calculated in the parameter calculator 20 as data. Then, based on the selected data, a learning model used for machine learning is generated, and the existing learning model is updated to the generated learning model.

### (Configuration of the failure prediction determiner 30)

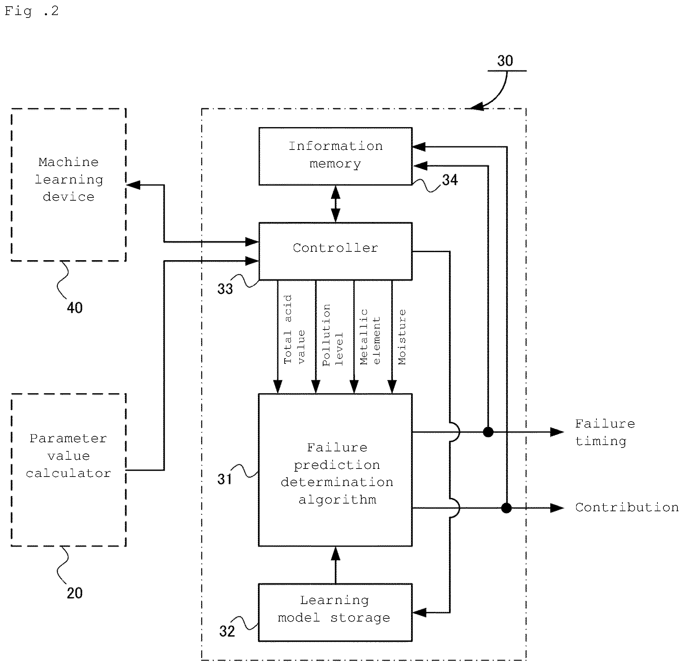

As shown in Fig. 2, the failure prediction determiner 30 comprises a failure prediction determination algorithm 31, a learning model storage 32, a controller 33, and an information memory 34.

The failure prediction determination algorithm 31 is an algorithm for performing machine learning in the failure prediction determiner 30, and it takes as input the parameter values of the parameters indicating the oil state of the hydraulic fluid calculated in the parameter calculator 20, performs machine learning using the learning model described below, and outputs, for example, failure prediction information including failure timing and contribution of the parameters indicating the oil state of the hydraulic oil, and corresponding messages to prevent failure.

The learning model storage 32 stores learning models generated in advance. Here, the learning model is data from which rules and patterns (outputs) are learned based on input data.

The controller 33 controls the operation of the failure prediction determiner 30 according to a control program stored in ROM (Read Only Memory) etc.

When the controller 33 receives the learning model to be updated from the machine learning device 40, it accesses the learning model storage 32 and rewrites the already stored learning model to the updated learning model.

The information memory 34 stores a database linking the information input from the parameter calculator 20 and the failure prediction information output from the failure prediction determination algorithm 31.

### (Configuration of machine learning device 40)

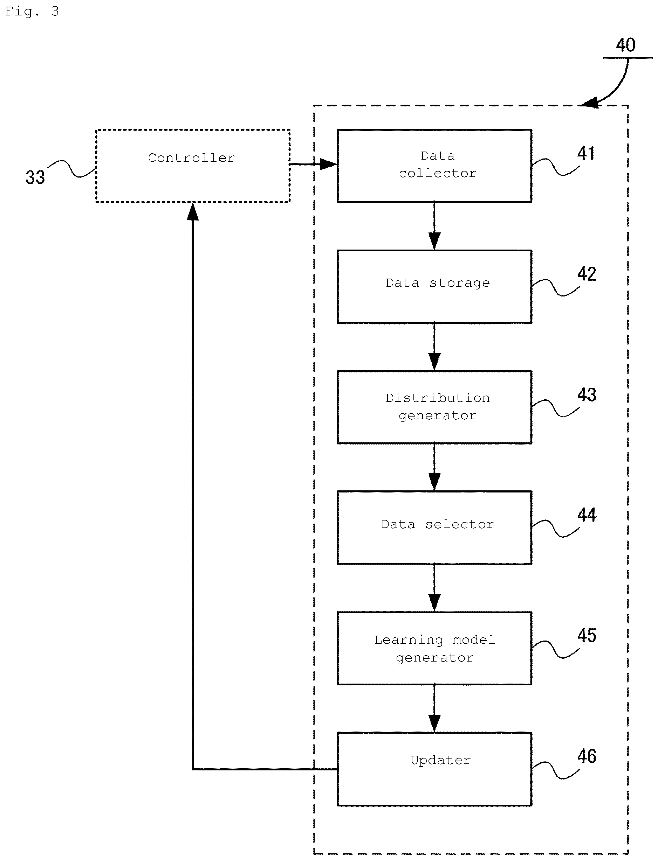

As shown in Fig. 3, the machine learning device 40 comprises a data collector 41, a data storage 42, a distribution generator 43, a data selector 44, a learning model generator 45, and an updater 46.

The data collector 41 collects data to perform machine learning in the failure prediction determiner 30. In this embodiment, the calculation results (data) stored in the information memory 34 in the failure prediction determiner 30, which stores the calculation results (data) of the parameter calculator 20, are obtained via the controller 33 in the failure prediction determiner 30.

If the machine learning device 40 is used in other systems, the data collector 41 may collect the data on its own.

The data storage 42 stores information input from the data collector 41, for example, in chronological order. The data storage 42 may also store information collected within a predetermined period of time, separated by predetermined time periods.

The distribution generator 43 generates a distribution for a group of data within a given data collection period stored in the data storage 42. For example, the distribution generator 43 may generate a normally distributed distribution of the calculated results (data) of the parameter calculator 20.

The data selector 44 selects data for updating the learning model used for machine learning from the data stored in the data storage 42. For example, in this embodiment, if the distribution generated by the distribution generator 43 changes more than a set threshold with respect to the existing distribution, the group of data after the change is selected as data for updating the learning model used in machine learning.

The learning model generator 45 generates a learning model for machine learning based on the data selected in the data selector 44.

The updater 46 updates the existing learning model to the learning model generated in the learning model generator 45. In this embodiment, the updater 46 sends a command message to the controller 33 in the failure prediction determiner 30 to update the existing learning model to the learning model generated in the learning model generator 45 and the learning model to be updated to the controller 33 to perform the learning model update.

### (Processing of machine learning device 40)

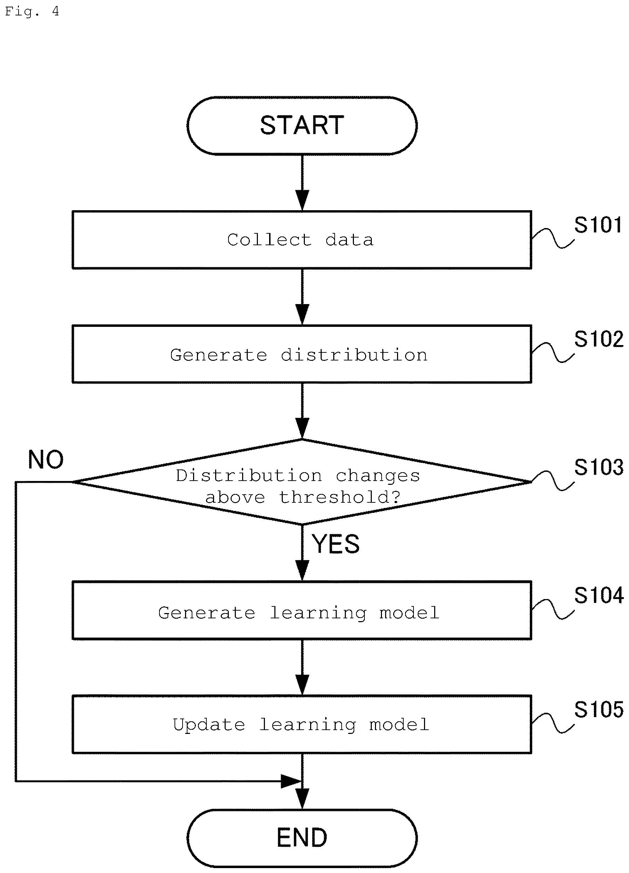

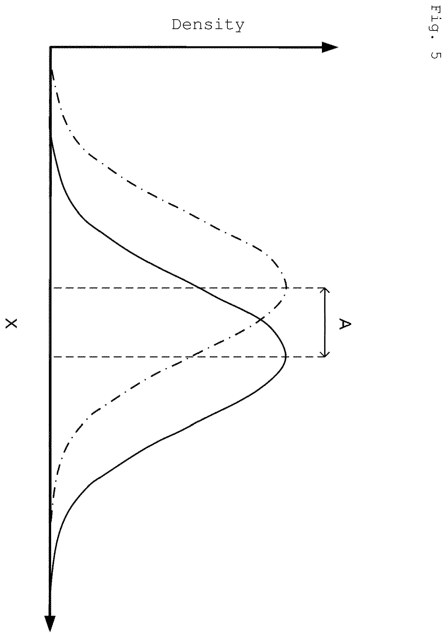

The processing of the machine learning device 40 according to the present embodiment will be described with reference to Figs. 4 and 5.

The data collector 41 collects data to perform machine learning in the failure prediction determiner 30 (step S101).

The distribution generator 43 generates a distribution for a group of data within a given data collection period stored in the data storage 42 (step S102). The distribution generator 43 generates and outputs to the data selector 44 the distribution for the data group within the most recent predetermined data collection period stored in the data storage 42 and the distribution for the data group within the data collection period before one of the most recent predetermined data collection periods. The processing of the distribution generator 43 may be reduced by storing the distributions generated by the distribution generator 43 for a group of data for a predetermined collection period prior to the most recent predetermined data collection period, for example, in a memory not shown.

The data selector 44 determines whether the distribution generated by the distribution generator 43 has changed more than a set threshold value relative to the existing distribution (step S103). If the data selector 44 determines that the distribution generated by the distribution generator 43 has not changed more than a set threshold value relative to the existing distribution ("NO" in step S103), the process returns to step S101.

On the other hand, when the data selector 44 determines that the distribution generated by the distribution generator 43 has changed more than the set threshold value relative to the existing distribution ("YES" in step S103), for example, if the center of the distribution has shifted "A" and "A" is more than the threshold value, as shown in Fig. 5, it selects a group of data after the change as data to update the learning model used for machine learning and outputs said data to the learning model generator 45.

The learning model generator 45 generates a learning model for machine learning based on the data selected in the data selector 44 (step S104). The updater 46 sends a command message to the controller 33 in the failure prediction determiner 30 to update the existing learning model to the learning model generated in the learning model generator 45 and the learning model to be updated to the controller 33 to perform the update of the learning model (step S105).

### (Effect)

As explained above, in the machine learning device 40 in this embodiment, the data selector 44 selects data for updating the existing learning model used for machine learning in the failure prediction determiner 30 from the data stored in the data storage 42, which stores collected data. The learning model generator 45 generates a new learning model by machine learning based on the selected data. Furthermore, the updater 46 updates the existing learning model with a new learning model generated in the learning model generator 45.

In other words, based on the selected data, existing learning models used for machine learning are generated, and based on the selected data, new learning models are generated by machine learning.

Therefore, for example, the accuracy in machine learning can be improved because the learning model used for updating is generated by unbiased and carefully selected data. In addition, since new learning models are generated by machine learning using unbiased and carefully selected data, the running costs associated with updating the learning models can be reduced.

In the machine learning device 40 in this embodiment, the distribution generator 43 generates a distribution for a group of data within a predetermined data collection period stored in the data storage 42. The data selector 44 compares the distribution generated by the distribution generator 43 with the distribution of the data group when the existing learning model is generated, and if the comparison results are not similar, the data group stored in the data storage is selected as the data group to update the learning model.

In other words, when the distribution generated by the distribution generator 43 is compared with the distribution of the data group when the existing learning model is generated and the comparison results are not similar, it is assumed that a change in the state of the subject body has occurred. Under these circumstances, it is expected that machine learning using the previous learning model will result in a loss of accuracy.

Therefore, when the distribution generated by the distribution generator 43 is compared with the distribution of the data group when the existing learning model is generated and the comparison result determines that they are not similar, the data group stored in the data storage 42 is selected as the data group to update the learning mode to generate the new learning model, and the existing learning model is updated to the generated learning model to improve the accuracy of machine learning. In addition, since the learning model used for updating is generated using unbiased and carefully selected data, the running costs associated with updating the learning model can be reduced.

### <Second embodiment>

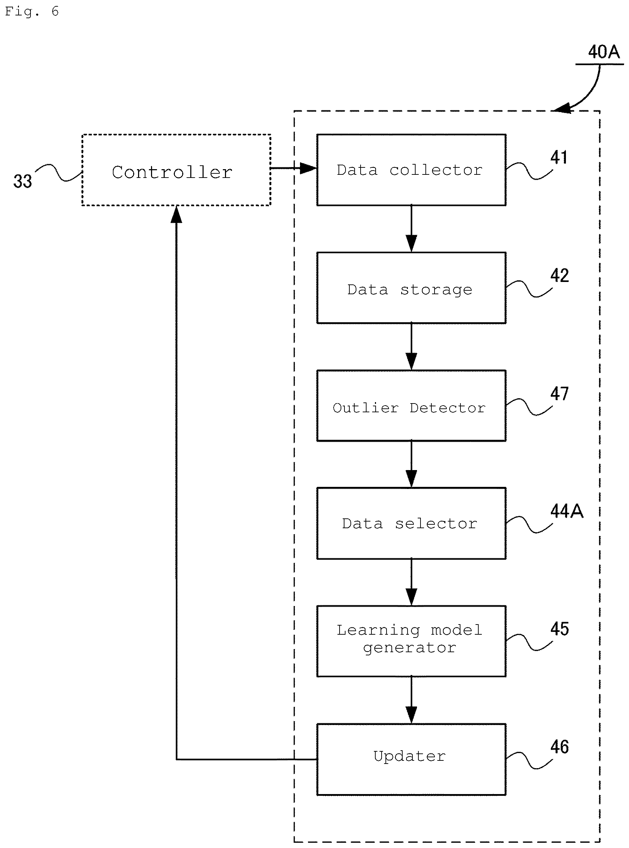

Hereinafter, the machine learning device 40A according to the present embodiment will be described with reference to Figs. 6 to 9.

### (Configuration of machine learning device 40A)

The configuration of the machine learning device 40A according to the present embodiment will be described with reference to Fig. 6.

As shown in Fig. 6, the machine learning device 40A comprises a data collector 41, a data storage 42, a data selector 44A, a learning model generator 45, an updater 46, and an outlier detector 47.

Detailed descriptions of the components with the same symbols as in the first embodiment are omitted, since they have the same functions.

The data selector 44A selects data for updating the learning model used for machine learning from the data stored in the data storage 42. For example, in this embodiment, among the stored data stored in the data storage within the most recent predetermined period, outliers to the data used to generate the existing learning model are selected as data for updating the learning model used for machine learning. The outlier is detected in the outlier detector 47 described below.

The outlier detector 47 uses the data stored in the data storage 42 as an input and performs machine learning using a dedicated algorithm and a learning model to detect outliers. The detected outliers are output to data selector 44A.

### (Configuration of outlier detector 47)

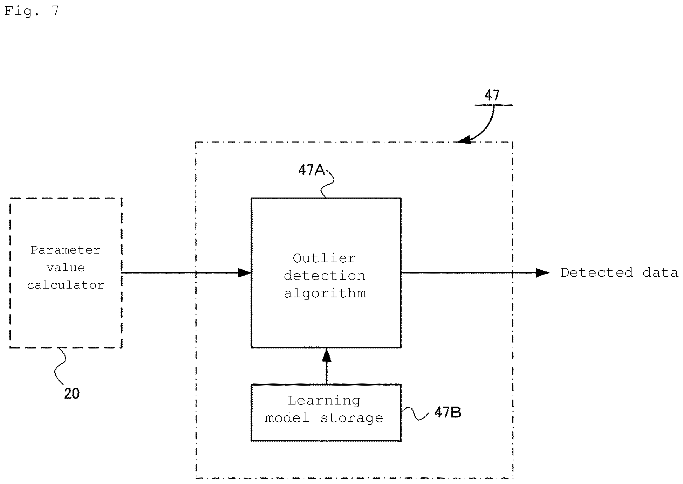

As shown in Fig. 7, the outlier detector 47 comprises an outlier detection algorithm 47A and a learning model storage 47B.

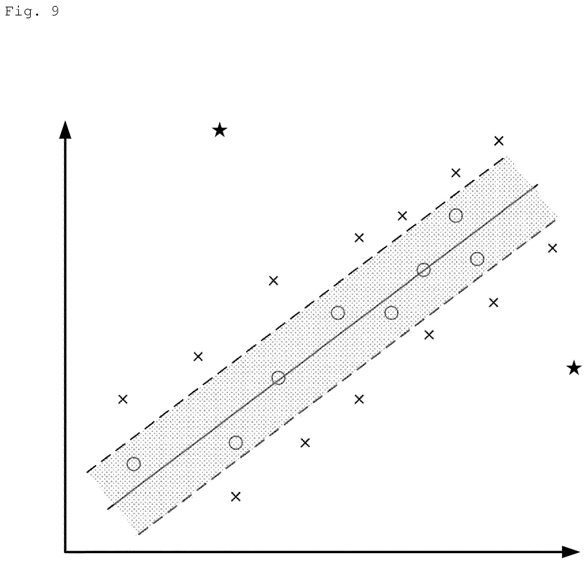

The outlier detector 47A is an algorithm for performing machine learning to detect so-called outliers, as indicated by the mark "X" in Fig. 9, using a learning model stored in the learning model storage 47B described below, for a data group consisting of multiple data.

When machine learning using the outlier detection algorithm 47A is performed, data such as the mark "*"in Fig. 9 is also detected, but such data may be excluded or otherwise processed as appropriate, depending on the purpose, etc.

The learning model storage 47B stores the learning model used in the performance of machine learning in the outlier detection algorithm 47A.

### (Processing of machine learning device 40A)

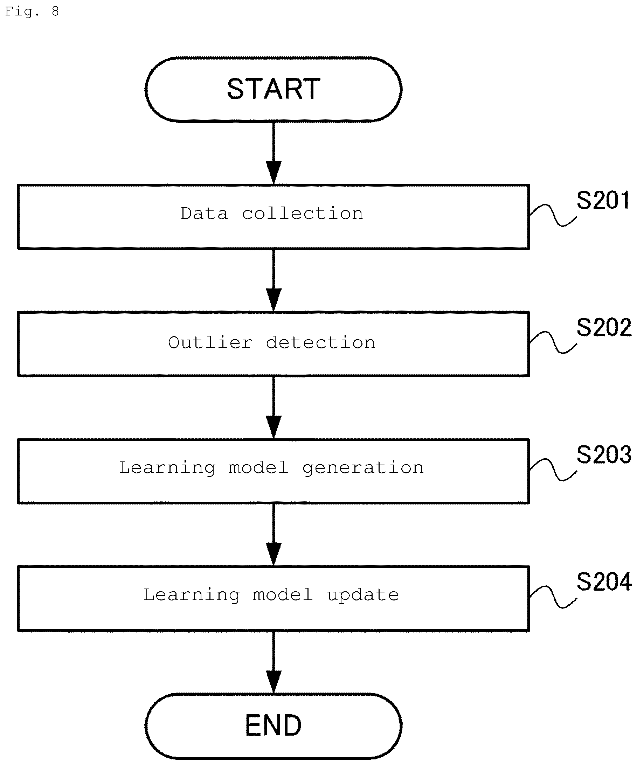

The processing of the machine learning device 40A according to the present embodiment will be described with reference to Figs. 8 and 9.

The data collector 41 collects data to perform machine learning in the failure prediction determiner 30 (step S201).

The outlier detector 47 uses the data stored in the data storage 42 as an input and performs machine learning using a dedicated algorithm and a learning model to detect outliers. The detected outliers are output to data selection section 44A (step S202). Specifically, the outlier detector 47 is equipped with an outlier detection algorithm 47A, and the outlier detection algorithm 47A uses a learning model stored in the learning model storage 47B, described below, to perform machine learning to detect so-called outliers, as indicated by the mark "×"in Fig. 9, for a data group consisting of multiple data, and outputs the detected outlier values to the data selector 44A.

The data selector 44A selects outliers to the data when generating existing training models detected in the outlier detector 47 from the stored data stored in the data storage within the most recent predetermined period of time, as data for updating the learning model used for machine learning.

The learning model generator 45 generates a learning model for machine learning based on the data selected in the data selector 44A (step S203). The updater 46 sends a command message to the controller 33 in the failure prediction determiner 30 to update the existing learning model to the learning model generated in the learning model generator 45 and the learning model to be updated to the controller 33 to perform the update of the learning model (step S204).

### (Effect)

As explained above, in the machine learning device 40A in this embodiment, the data selector 44A detects outliers from the stored data stored in the data storage 42 during the predetermined data collection period with respect to the data used to generate the existing learning model, and selects the data containing such outliers as data to update the learning model.

In other words, since the data selector 44A performs machine learning using an algorithm for detecting outliers, detects outliers in the stored data stored in the data storage 42 within the predetermined data collection period relative to the data used to generate the existing learning model, and selects the data containing those outliers as data for updating the learning model, as a result, data that deviate more than a certain amount from the distribution of data when generating an existing learning model can be selected as data for generating a new learning model.

Therefore, the accuracy of machine learning can be improved by generating a new learning model by selecting a group of data that has been machine learned using an algorithm to detect outliers, and updating the existing learning model to the generated learning model. In addition, since the learning model used for updating is generated by carefully selected data, the running costs associated with updating the learning model can be reduced.

Although machine learning with an outlier detection algorithm is used as an example in this embodiment, processing may also be performed using an outlier detection method that does not use machine learning, such as the 3σ method, for example.

### <Third embodiment>

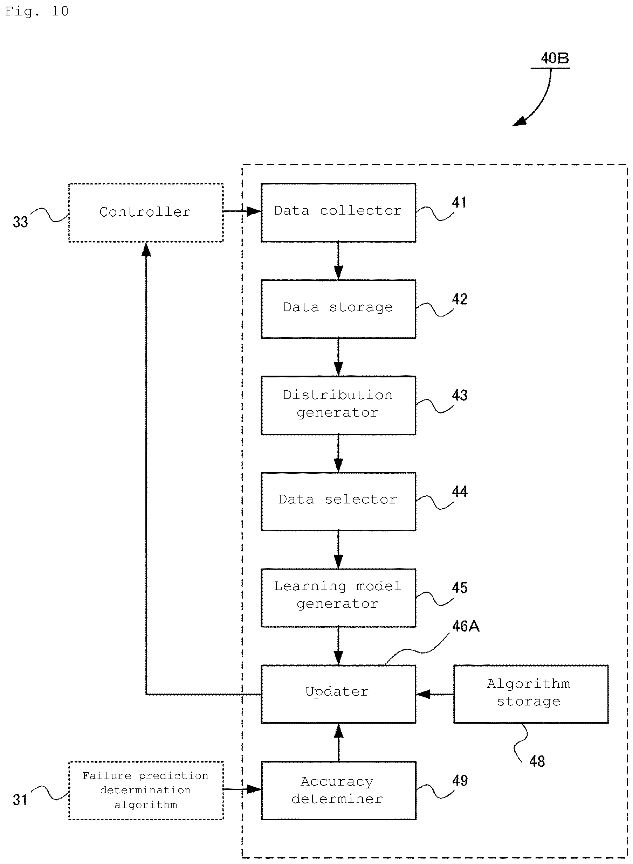

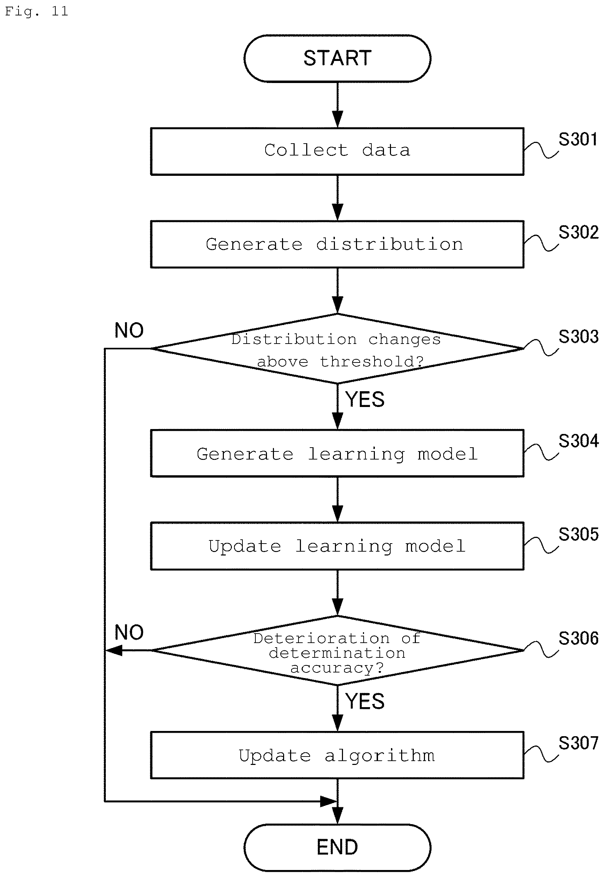

Hereinafter, the machine learning device 40B according to the present embodiment will be described with reference to Figs. 10 and 11.

### (Configuration of machine learning device 40B)

The configuration of the machine learning device 40B according to the present embodiment will be described with reference to Fig. 10.

As shown in Fig. 10, the machine learning device 40B comprises a data collector 41, a data storage 42, a distribution generator 43, a data selector 44, a learning model generator 45, an updater 46A, an algorithm storage 48, and an accuracy determiner 49.

Detailed descriptions of the components with the same symbols as the first and second embodiments are omitted, as they have the same functions.

The updater 46A updates the existing learning model to the learning model generated in the learning model generator 45, and further changes the algorithm used for machine learning if the accuracy of machine learning using the learning model used for machine learning generated in the learning model generator 45 is determined to be lower than the accuracy of machine learning using the learning model used for the existing learning model for machine learning in the accuracy determiner 49, which is described later.

The algorithm storage 48 stores a plurality of machine learning algorithms with different characteristics. The updater 46A selects an algorithm for updating from the algorithms stored in the algorithm storage 48 and outputs it to the controller 33 in the failure prediction determiner 30.

The accuracy determiner 49 compares the accuracy of machine learning using the existing learning model with the accuracy of machine learning using the learning model used in the machine learning generated in the learning model generator 45, and determines the accuracy of machine learning using the learning model used for machine learning generated in the learning model generator 45.

### (Processing of machine learning device 40B)

The processing of the machine learning device 40B according to the present embodiment will be described with reference to Fig. 11.

The data collector 41 collects data to perform machine learning in the failure prediction determiner 30 (step S301).

The distribution generator 43 generates a distribution for a group of data within a given data collection period stored in the data storage 42 (step S302). The distribution generator 43 generates and outputs to the data selector 44 the distribution for the data group within the most recent predetermined data collection period stored in the data storage 42 and the distribution for the data group within the data collection period before one of the most recent predetermined data collection periods.

The data selector 44 determines whether the distribution generated by the distribution generator 43 has changed more than a set threshold value relative to the existing distribution (step S303). If the data selector 44 determines that the distribution generated by the distribution generator 43 has not changed more than a set threshold value relative to the existing distribution ("NO" in step S303), the process returns to step S301.

On the other hand, if the data selector 44 determines that the distribution generated by the distribution generator 43 has changed more than the set threshold value relative to the existing distribution ("YES" in step S303), it selects a group of data after the change as data for updating the learning model used in machine learning and outputs said data to the learning model generator 45.

The learning model generator 45 generates a learning model for machine learning based on the data selected in the data selector 44 (step S404). The updater 46A sends a command message to the controller 33 in the failure prediction determiner 30 to update the existing learning model to the learning model generated in the learning model generator 45 and the learning model to be updated to the controller 33 to perform the update of the learning model (step S305).

Next, the accuracy determiner 49 compares the accuracy of machine learning using the existing learning model with the accuracy of machine learning using the learning model used in the machine learning generated in the learning model generator 45, and determines the accuracy of machine learning using the learning model used for machine learning generated in the learning model generator 45 (step S306).

If, as a result of the determination in the accuracy determiner 49, the accuracy of machine learning using the learning model used for machine learning generated in the learning model generator 45 is not worse than the accuracy of machine learning using the existing learning model ("NO" in step S306), the process returns to step S301.

On the other hand, if, as a result of the determination in the accuracy determiner 49, the accuracy of the machine learning using the learning model used for machine learning generated in the learning model generator 45 is worse than the accuracy of the machine learning using the existing learning model ("YES" in step S306), the updater 46A sends a command message to the controller 33 in the predictive failure determiner 30 to update the existing predictive failure determination algorithm to another algorithm stored in the algorithm storage 48 and another algorithm to be updated to the controller 33 to perform the algorithm update (step S307).

### (Effect)

As explained above, in the machine learning device 40B in this embodiment, the accuracy determiner 49 compares the accuracy of the existing learning model with the accuracy of the new learning model. The updater 46A changes the algorithm used for machine learning when the accuracy of a new learning model generated in the learning model generator 45 is lower than the accuracy of the existing learning model.

In other words, when the accuracy of machine learning using a new learning model for machine learning generated in the learning model generator 45 is lower than the accuracy of machine learning using the existing learning model for machine learning, the hyperparameters are updated and evaluated, and if no improvement is seen, the algorithm is also changed. SVM and DNN can be used as examples of algorithms, but in addition to evaluating these algorithms by themselves, evaluation may also be performed by ensemble learning, in which multiple algorithms are mixed together for evaluation.

Therefore, since the algorithm is also changed if the accuracy of machine learning is lower than the previous accuracy even after updating the learning model, the accuracy of machine learning can be improved. In addition, since the generation of the learning model for updating, which has a large impact on running costs, is performed using carefully selected data, the running costs associated with updating the learning model can be reduced. If the hyperparameters are updated and evaluated and no improvement is seen, the algorithm is also changed, so even if the algorithm is the same, the tuning accuracy of the hyperparameters may be expected to improve.

In the first embodiment, the threshold value may be set freely. The threshold value may be set automatically according to the similarity of the data selected by the data selector 44.

Even though the example is shown in the third embodiment that if the distribution generated by the distribution generator 43 is determined to have changed more than a set threshold with respect to the existing distribution, the data selector 44 selects a group of data after the change as data for updating the learning model used in machine learning, as shown in the second embodiment, the data selector 44A may select outliers of the stored data stored in the data storage within the most recent predetermined period of time against the data when generating the existing learning model to be detected in the outlier detector 47, as data for updating the learning model used for machine learning.

The machine learning devices 40, 40A, 40B can be realized by recording the processes of the machine learning devices 40, 40A, 40B on a recording medium readable by a computer system and having the programs recorded on this recording medium read and performed by the machine learning devices 40, 40A, 40B. Computer systems here include hardware such as operating systems and peripheral devices.

"Computer system" shall include the homepage provision environment (or display environment) if the WWW (World Wide Web) system is used. The above program may be transmitted from a computer system storing this program in a memory device or the like to another computer system via a transmission medium or by transmission waves in a transmission medium. Here, "transmission medium" for transmitting the program refers to a medium that has the function of transmitting information, such as a network (communication network) such as the Internet or a communication channel (communication line) such as a telephone line.

The above programs may also be those that can be used to realize some of the aforementioned functions. Furthermore, it may be a so-called difference file (difference program), which can realize the aforementioned functions in combination with a program already recorded in the computer system.

Although the above embodiments of this invention have been described in detail with reference to the drawings, specific configurations are not limited to these embodiments, and includes designs and the like within a range that does not deviate from the gist of the present invention.

According to the above failure prediction detection system, the accuracy in machine learning can be improved and the running cost can be reduced by updating to a new learning model generated by selecting data, etc.

### Description of the reference numerals

1; Failure prediction detection system
10 ; Oil condition sensor
20 ; Parameter calculator
30; Failure prediction determiner
31; Failure prediction determination algorithm
32 ; Learning model storage
33 ; Controller
34 ; Information memory
40 ; Machine learning Device
40A ; Machine learning Device
40B ; Machine learning Device
41 ; Data collector
42 ; Data Storage
43 ; Distribution generator
44 ; Data selector
44A; Data selector
45 ; Learning model generator
46 ; Updater
46A; Updater
47 ; Outlier detector
47A; Outlier detection algorithm
47B; Learning model storage
48; Algorithm storage
49 ; Precision determiner
100 ; Equipment

## Claims

1. A machine learning device **characterized in** comprising:
a data collector to collect data to perform machine learning;
a data storage to store the collected data;
a data selector for selecting data for updating the existing learning model used for machine learning from the data stored in the data storage;
a learning model generator that generates a new learning model by the machine learning based on the selected data;
an updater that updates the existing learning model with the new learning model generated in the learning model generator.

2. The machine learning device according to claim 1,
comprising a distribution generator that generates a distribution for a group of data within a predetermined data collection period stored in the data storage;
wherein the data selector is characterized to compare the distribution generated by the distribution generator with the distribution of the group of data when the existing learning model is generated, and when the comparison result is determined to be not similar, the group of data stored in the data storage is selected as the group of data to update the learning model.

3. The machine learning device according to claim 1 **characterized in that** the data selector detects outliers in the stored data stored in the data storage within the predetermined data collection period with respect to the data used to generate the existing learning model, and selects the data containing such outliers as data for updating the learning model.

4. The machine learning device according to claim 1,
comprising the accuracy determiner that compares the accuracy of the existing learning model with the accuracy of the new learning model;
wherein the updater is **characterized in** changing the algorithm used for the machine learning when the accuracy of the new learning model generated by the learning model generator is lower than the accuracy of the existing learning model.

5. A generation method for learning model **characterized in** comprising the steps of:
a first step of collecting data to perform machine learning;
a second step of selecting data to update an existing learning model used for machine learning from among the collected data; and
a third step of generating a new learning model by the machine learning based on the selected data.

6. A program to cause a computer to perform the steps of:
a first step of collecting data to perform machine learning;
a second step of selecting data to update an existing learning model used for machine learning from among the collected data;
a third step of generating a new learning model by the machine learning based on the selected data; and
a fourth step of updating the existing learning model to the new learning model.
